# EUROPEAN PATENT SPECIFICATION

(11) **EP 0 608 422 B1**
(45) Date of publication and mention of the grant of the patent: **08.07.1998**
(21) Application number: 92921399.9
(22) Date of filing: 19.10.1992
(51) Int. Cl.: E02F 9/16

(54) **OPERATOR CABIN OF BULLDOZER**
FAHRERHAUS FUER EINE PLANIERRAUPE
CABINE DE CONDUCTEUR DE BULLDOZER

(30) Priority: 18.10.1991 JP 297640/91; 07.02.1992 JP 56979/92; 07.02.1992 JP 13206/92 U
(43) Date of publication of application: 03.08.1994
(73) Proprietor: KABUSHIKI KAISHA KOMATSU SEISAKUSHO, Minato-ku Tokyo 107 (JP)
(72) Inventor: UI, Kunio Komatsu Awazu Plant 23, Tsu Futsumachi, Ishikawa 923-03 (JP)
(74) Representative: Meissner, Peter E., Dipl.-Ing.
(86) International application number: PCT/JP92/01357
(87) International publication number: WO 93/08338

(56) References cited:
- DE-A- 1 192 536
- DE-A- 1 910 819
- JP-A- 3 239 679
- JP-A- 3 239 679
- JP-U- 3 002 813
- JP-U-58 094 755
- "Kuhn, Herses Rotatives",9.90 "Kuhn, Herses Alternatives HA, Serie 1000",11.89

## Description

### BACKGROUND OF THE INVENTION

### Field of the Invention

The present invention relates to an operator cabin of a bulldozer.

### Related Background Art

The leaflets "KUHN, Herses Rotatives", 09.90 and "KUHN,Herses Alternatives HA -Serie 1000-disclose a cabin in the form of a hexagonal truncated pyramid, whose front pillars are inclined with respect to the vertical direction indicated by the exhaust pipe. The door is inclined also and fits into the front pillar. The rear left and right windows converge towards each other in two directions.

Another operator cabin 51 which has usually been used is formed in a shape of truncated hexagonal pyramid which is made up by combining a trapezoidal front part and a rectangular rear part as viewed from above as shown in Fig. 10 and has a front face 52 which is formed to be slantwise in its vertical direction with a fixed width. Accordingly, front side supporting pillars 53 are made to be straight. However, a bulldozer provided with an engine at the front side is disadvantageous in that, since the positions of the front side supporting pillars of the operator cabin 51 are determined in view of the engine space, the visibility from the operator to right and left-side parts of the front equipment is obstructed by these front side supporting pillars and therefore the operator should incline his body to obtain his visibility to the front working equipment while avoiding the obstruction by the supporting pillars. The construction of the operator cabin 71 is basically formed with a roof panel 72, side panels 73 and lower base frames as shown in Fig. 11 and lifting hooks 74 for lifting the operator cabin 71 and lowering it onto a bulldozer are generally welded to the roof panel 72.

For additionally installing a lamp on the ceiling of the operator cabin 71, lamp brackets 76 and 77, which are shown disassembled, are generally provided separately from the lifting hooks and installed inside the operator cabin. However, a bracket retaining block 78 exclusively used for the lamp bracket is required to install the lamp brackets 76 and 77 and therefore the bracket retaining block 78 should be additionally welded to the roof panel 72. This welding work is extremely difficult for the following reasons. An skilled serviceman is required because the operator cabin is made of a thin sheet metal. Finish workmanship is important since the welded part can be seen from outside. Rust may appear on the welded parts. These reasons make it difficult to carry out field welding.

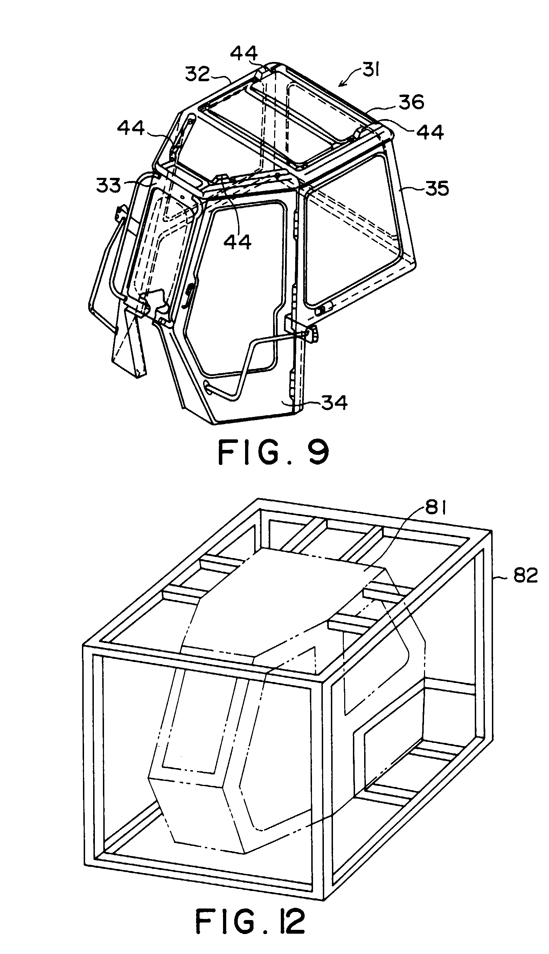

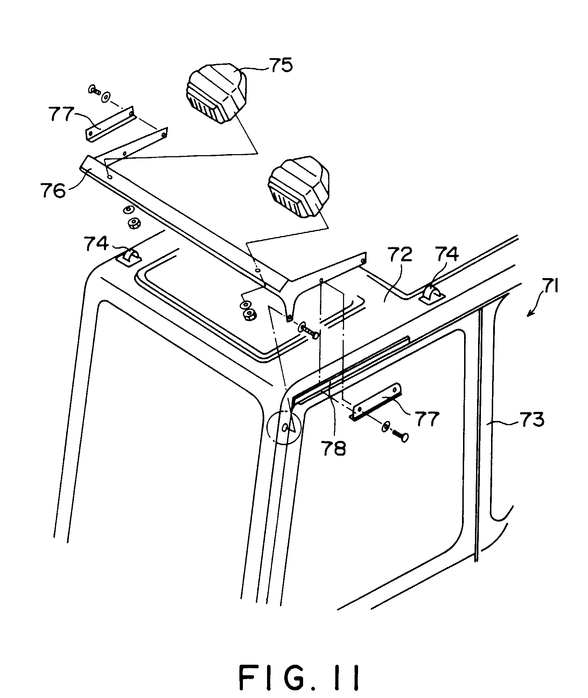

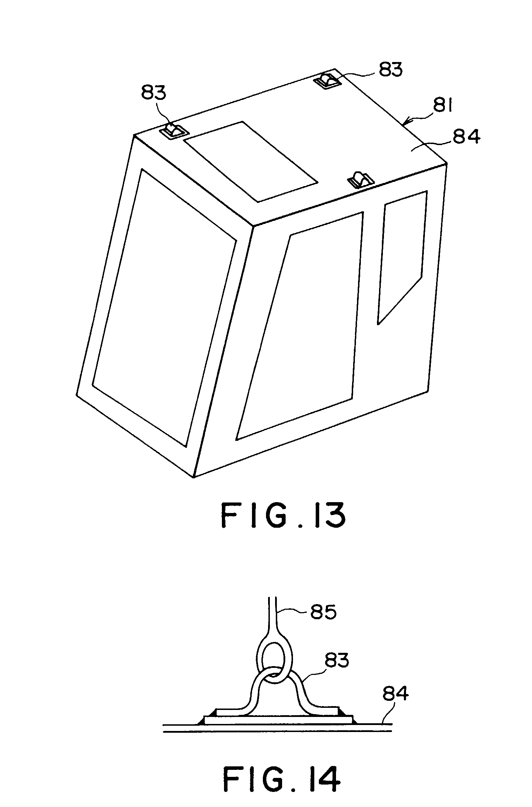

As described above, the operator cabin 71 is basically formed by the roof panel 72, side panels 73 and base frames. For assembling the roof panel 72 and side panels 73, a large-scale assembly jig has been used to ensure dimensional accuracy of the assembly. Lifting hooks for lifting the operator cabin 71 to install it on the bulldozer are welded to the roof panel 72. However, the jig is formed as a box type frame 82 which surrounds the operator cabin 81 as shown in Fig. 12 to hold the panels from the outside and it is disadvantageous in that the welding service is extremely troublesome because the serviceman should carry out welding work inside such complicated framework and the costs of such large-scale installation are expensive. In addition, lifting hooks 83 are welded to the roof panel 84, which is made of a thin sheet metal, of the operator cabin as shown in Figs. 13 and 14 and therefore there is a problem of defects of the welded part and distortion due to a load during lifting work with wire rope 85.

### SUMMARY OF THE INVENTION

An object of the present invention is to provide an operator cabin with which the above various problems are to be solved.

The above-described object, is attained by an operator cabin of a bulldozer being formed in the shape of a truncated hexagonal pyramid, having a roof panel integrally molded by press work and side panels , which are assembled by coupling a plurality of reference holes provided on the periphery of said roof panel and the same number of fitting holes provided on said side panels as said reference holes to be aligned with said reference holes, wherein right and left utmost front supporting pillars are provided to be outwardly slantwise in a range from an upper part to an intermediate part of said operator cabin and to be inwardly slantwise in a range from said intermediate part to a bottom part with a progressively increasing width between said supporting pillars to expand a forward field of view from an eye point of an operator who stays inside right and left doors of said operator cabin.

Further embodiments are disclosed in the subclaims 2 and 3.

### BRIEF DESCRIPTION OF THE DRAWINGS

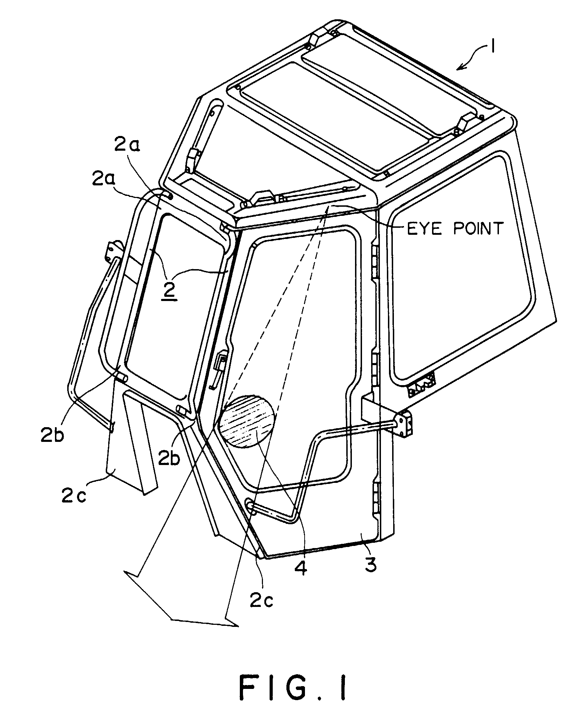

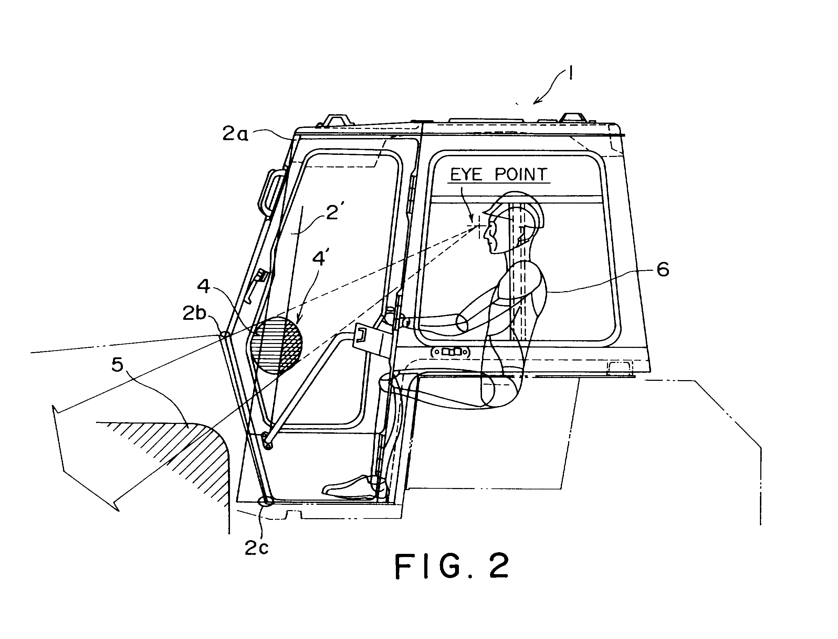

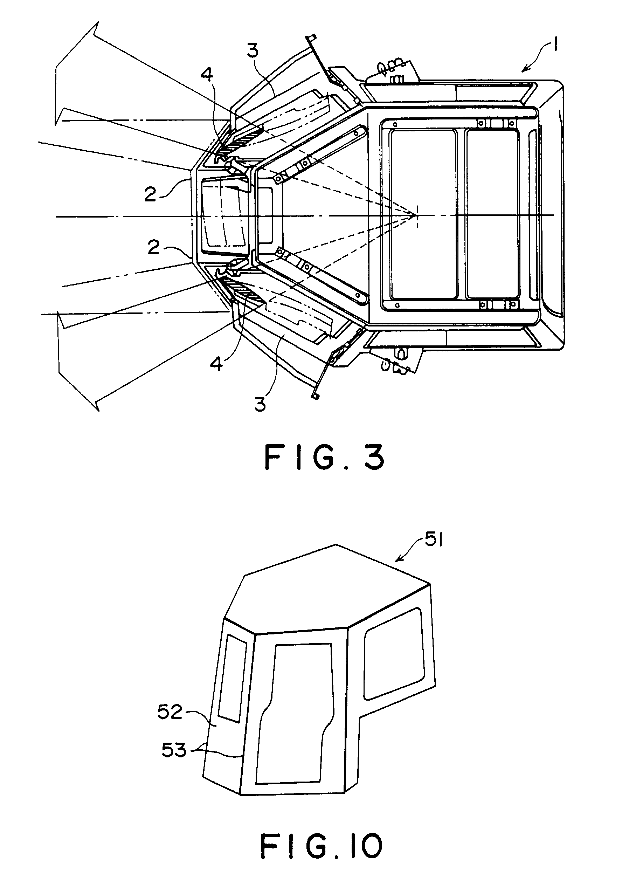

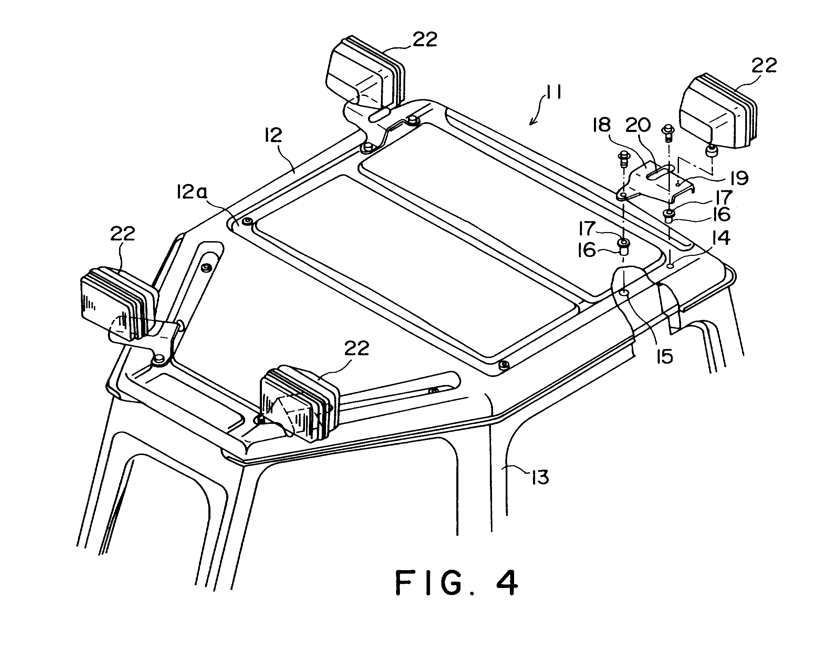

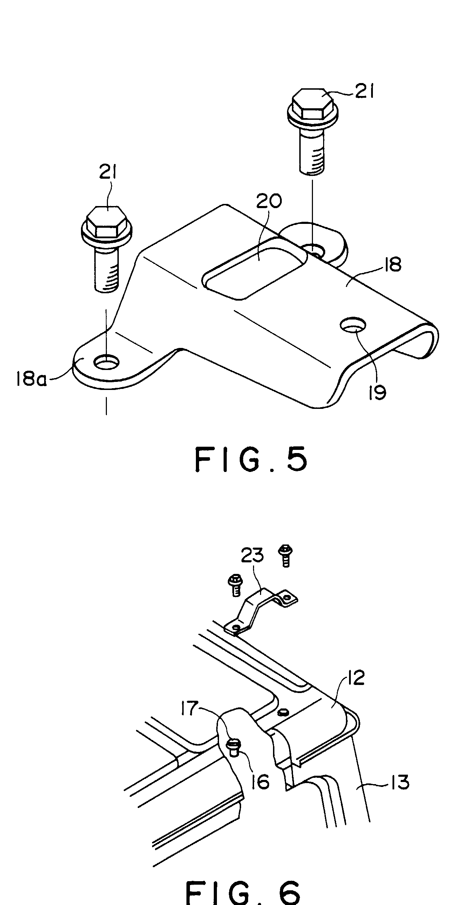

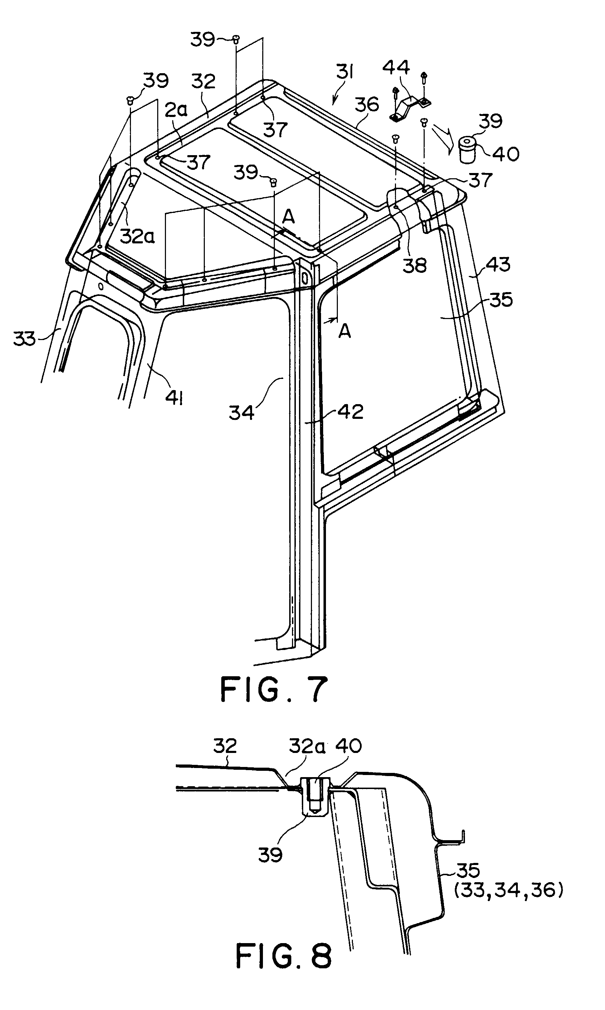

Fig. 1 is a perspective view of a first embodiment of an operator cabin of a bulldozer according to the present invention, Fig. 2 is a side view of Fig. 1, and Fig. 3 is a plan view of Fig. 1. Fig.4 is a perspective view of a second embodiment of an operator cabin of a bulldozer according to the present invention, Fig. 5 is an expanded perspective view of a lifting part of Fig. 4, and Fig. 6 is a perspective view when the work lamp bracket is not installed. Fig. 7 is a perspective view of a skeleton of the operator cabin according to the invention, Fig. 8 is an expanded view of section A-A of Fig. 7, and Fig. 9 is a perspective view showing an appearance of the operator cabin including the lifting hooks according to the invention. Fig. 10 is a perspective view of the operator cabin of a conventional bulldozer, Fig. 11 is a perspective view showing an example of the work lamp bracket installed on the operator cabin, Fig. 12 is an illustration of the jig used for assembly of the conventional operator cabin, Fig. 13 is a perspective view showing the lifting hooks provided on the conventional operator cabin, and Fig. 14 is a perspective view showing the details of the lifting hooks shown in Fig. 14.

### Best Modes for Carrying Out the Invention

Embodiments of the present invention are described, referring to Figs. 1 to 9.

Figs. 1 to 3 respectively show a first embodiment of an operator cabin of a bulldozer according to the invention; Fig. 1 is a perspective view of the operator cabin, Fig. 2 is a side view of Fig. 1 and Fig. 3 is a plan view of Fig. 1.

In the operator cabin 1 according to the present invention which is formed in the shape of truncated hexagonal pyramid, utmost front right and left supporting pillars 2 are provided to be outwardly slantwise from an upper part 2a to an intermediate part 2b of the operator cabin and to be inwardly slantwise with a progressively increasing distance between the supporting pillars from the intermediate part 2b to a bottom part 2c whereby a forward field of view 4 from an eye point of an operator in right and left side doors 3, 3 is expanded.

The operator cabin 1 comprises a front part with the door 3 and a rear part without the door 3. Right and left supporting pillars 2 are provided at the utmost front side of the front part from the upper part 2a to the bottom part 2c to be <-shaped as viewed from the left side and >-shaped as viewed from the right side. The distance between supporting pillars 2 is progressively increased to be largest at a position close to the lower part of the door 3 and the bottom part 2c is provided slantwise to be retracted from the intermediate part 2b. Accordingly, the door 3 is installed to be slanted outwardly from the upper part to the lower part. Therefore the forward field of view 4 is obtained at the door 3 side. The lower parts of the supporting pillars 2 are respectively given a clearance to avoid the contact with the rear part of the engine 5.

Specifically, though the field of view 4 from the eye point of the operator 6 is limited to only a portion 4' as shown in Fig.2 in the conventional operator cabin with supporting pillars 2', a portion 4 is added to the field of view in case of the embodiment to improve the visibility. This field of view is shown with an outlined arrow in Fig. 1 as a side view and outlined arrows in Fig. 3 as a plan view to allow the operator to directly watch both end parts of the front working equipment from his seat without changing his operating position.

Figs. 4 to 6 respectively show a second embodiment of the operator cabin of the bulldozer according to the invention; Fig. 4 is a perspective view of the operator cabin, Fig. 5 is an expanded perspective view of the lifting hook part of Fig. 4, and Fig. 6 is a perspective view when the work lamp bracket is not installed.

The operator cabin 11 is provided with a roof panel 12 and side panels 13, and the roof panel 12 which is integrally molded by press work is assembled with side panels 13 by coupling a plurality of reference holes 14 provided at the periphery of the roof panel 12 and the same number of fitting holes 15 as the reference holes provided to be aligned with the reference holes 14 with positioning bosses 16. Adjacent positioning bosses 16, 16 are provided with taps 17, 17 and a lifting hook 18, which is provided with a work lamp fixing hole 19 and a wire rope hole 20 is fixed at a specified position between these taps 17, 17.

The roof panel 12 is a truncated hexagon comprising a trapezoid with a smaller width at its front side and a rectangle which extends from the central part to the rear part, and the side panels 13 are fitted to the base frames, not shown, while being slightly slanted with a progressively increasing width toward the lower side, thus forming the operator cabin 11. The reference holes 14 of the roof panel 12 are provided at a groove 12a as shown in Fig. 4 and the fitting holes 15 which mate with these reference holes 14 are provided at a part of each side panel 13 which comes in contact with the rear surface of the groove 12a. The positioning bosses 16 are made from a bar material in the shape of a stepped part with a reduced diameter and the reduced diameter part is inserted into the reference hole and the fitting hole and the stepped part with a larger diameter serves as a stopper. The roof panel and the side panels are assembled to form the operator cabin 11 by aligning the reference holes 14 with the fitting holes 15 and coupling these holes with positioning bosses 16. In this embodiment, the positioning bosses 16 are provided with taps 17 and the lifting hook 18 is installed at a specified position between these taps 17, 17. In this embodiment, the lifting hook 18, which is to be provided at a position with a specified pitch between the taps 17, 17, is provided at four positions in total, two right and left positions of the front part and two right and left positions of the rear part which form the ceiling of the operator cabin 11. The lifting hook has a section having two surfaces with a certain height and the work lamp fixing hole 19 is provided at an end part in the longitudinal direction of the upper surface part and the square wire rope hole 20 is provided at its approximate center position of the upper surface part, and fitting flange parts 18a which are extended to both right and left sides and forced to contact the above-described fitting positions are provided at the lower surface part at one side of the lifting hook. When bolts 21 are inserted into the holes provided in these fitting flange parts and tightly fitted to the taps 17, the lifting hook firmly fixed to the operator cabin 11.

For installing the work lamp 22 on the lifting hook 18, the threaded part of the fitting part of the work lamp unit is inserted from right above into the work lamp fitting hole 19 and fixed with a fixing means such as a nut from the underside. For using the lifting hook 18 to lift the operator cabin 11, the work lamp 22 is removed in advance and a wire rope, not shown, is passed through the wire rope hole 10 and the operator cabin can be lifted. If the work lamp 22 need not be installed, a lifting hook as shown in Fig. 6 can be provided. However, it is necessary to additionally install the work lamp, the lifting hook 23 shown in Fig. 6 can be replaced with the lifting hook 18 which also serves as the bracket.

Figs. 7 to 9 respectively show a third embodiment of an operator cabin of a bulldozer according to the present invention; Fig. 7 is a perspective view of a skeleton of the operator cabin according to the invention, Fig. 8 is an expanded view of the section A-A of Fig. 8, and Fig. 9 is a perspective view showing the appearance of the operator cabin including the lifting hook according to the invention. The operator cabin 31 comprises a roof panel 32, side panels 33, 34, 35 and 36 and base frames, not shown, whereby the roof panel is integrally molded as one unit and provided with a plurality of reference holes 37, 37, ... at its periphery, the side panels are provided with the same number of fitting holes 38, 38, ... which mate the reference holes 37 and positioning bosses 39, 39, ... are provided in the reference holes 37 and the fitting holes 38 of the side panels, the positioning bosses 39 being provided with a tap, respectively.

The roof panel 32 is a truncated hexagon comprising a trapezoid with a smaller width at its front side and a rectangle which extends from the central part to the rear part, and the side panels 33, 34, 35 and 36 are fitted to the base frames, not shown, while being slightly slanted with a progressively increasing width toward the lower side, thus forming the operator cabin 31. Specifically, the side panel 33 is provided as a front face panel, side panels 34, 34 are provided at both sides of the side panel 33 and side panels 35, 35 are provided following the side panels 34, and the side panel 36 is provided following the side ends of the side panels 35. Those frame members such as internal front pillars 41, center pillars 42 and rear pillars 43 are provided at all connecting positions of the side panels as shown and the side panels 33, 34, 35 and 36 are arranged to cover these supporting pillars. The reference holes 37 to be provided on the roof panel 32 are formed at a part formed by the groove 32a as shown in Figs. 7 and 8. The side panels 33, 34 35 are provided with the fitting holes 38 at their parts which come in contact with the rear surface of the groove 32a. The periphery of the roof panel 32 and the upper peripheries of side panels 33, 34, 35 and 36 are kept contact with one another as shown in Fig. 8 and isolated from the outside. Positioning bosses 39 are made as stepped stub rods each having larger and smaller diameters. A smaller diameter part is inserted into the reference hole and the fitting hole and a larger diameter part is used to serve as a stopper.

The following describes an assembly of the roof panel 32 and side panels 33, 34, 35 and 36. For assembling the side panels 33, 34, 35 and 36 and fitting the roof panel 32 to the assembly of side panels, the fitting holes 38 of side panels 33, 34, and 35 are aligned with the reference holes 37 and positioning bosses 39 are inserted through respective aligned reference holes 37 to fitting holes 38 whereby the roof panel and the side panels are positioned. The positioning bosses 39 are welded to the roof panel 32 and the side panels 33, 34, 35 and 36 to for an integrated assembly. A tap 40 is provided in each of positioning bosses 39 and a lifting hook 44 can be fitted by using the taps as shown in Fig. 7.

In this embodiment, an fitting example of the lifting hook 44 to the taps 40 has been described. Moreover, such items as, for example, an additional lamp, a guard for protection from dropping objects, etc. can be attached.

### Industrial Applicability

When the operator cabin according to the present invention is applied to a bulldozer, the visibility to the front working equipment such as, for example, both ends of the blade can be improved and ahead illumination is possible since work lamps can be installed. In addition, the operator cabin can be built up without using a large-scale assembly jig.

## Claims

1. An operator cabin of a bulldozer being formed in the shape of a truncated hexagonal pyramid, having a roof panel (12) integrally molded by press work and side panels (13), which (12, 13) are assembled by coupling a plurality of reference holes (14) provided on the periphery of said roof panel (12) and the same number of fitting holes (15) provided on said side panels (13) as said reference holes (14) to be aligned with said reference holes,
wherein right and left utmost front supporting pillars (2) are provided to be outwardly slantwise in a range from an upper part (2a) to an intermediate part (2b) of said operator cabin (1) and to be inwardly slantwise in a range from said intermediate part (2b) to a bottom part (2c) with a progressively increasing width between said supporting pillars (2) to expand a forward field of view from an eye point of an operator who stays inside right and left doors (3) of said operator cabin.

2. An operator cabin of a bulldozer according to claim 1, wherein said roof panel (12) and said side panels (13) are assembled by coupling said reference holes (14) and said fitting holes (15) to be aligned with said reference holes by using positioning bosses (16), said adjacent posisioning bosses (16) being provided with taps (17) respectively.

3. An operator cabin of a bulldozer according to claim 2, wherein a lifting hook (18) is fitted at a specified position between said taps (17), said lifting hook (18) being provided with a work lamp fitting hole (19) and a wire rope hole (20).

## Patentansprüche

1. Fahrerhaus einer Planierraupe, das als sechseckiger Pyramidenstumpf mit einem aus einem Stück gepreßten Dachteil (12) und Seitenteilen (13) ausgeführt ist, die (12, 13) dadurch zusammengebaut werden, daß eine Anzahl von Bezugsbohrungen (14) am Umfang des Dachteils (12) und die gleiche Anzahl von Montagebohrungen (15) wie die der Bezugsbohrungen (14), die miteinander fluchtend auszurichten sind, in den Seitenteilen (13) verbunden werden, wobei die rechte und linke vorderste Säule (2) im Bereich von einem oberen Abschnitt (2a) zu einem mittleren Abschnitt (2b) des Fahrerhauses (1) nach außen geneigt und im Bereich vom mittleren Abschnitt (2b) zu einem unteren Abschnitt (2c) bei zunehmendem Breitenabstand zwischen den tragenden Säulen (2) nach innen geneigt sind, so daß das Sichtfeld eines sich zwischen der rechten und linken Tür (3) im Inneren des Fahrerhauses befindlichen Fahrers von seinem Blickpunkt aus nach vorn vergrößert wird.

2. Fahrerhaus nach Anspruch 1, bei dem das Dachteil (12) und die Seitenteile (13) zusammengebaut werden, indem die Bezugsbohrungen (14) und die Montagebohrungen (15), die mit den Bezugsbohrungen fluchtend auszurichten sind, mit Hilfe von Positionierzapfen (16) verbunden werden, wobei benachbarte Positionierzapfen (16) jeweils mit Gewinderingen (17) versehen werden.

3. Fahrerhaus nach Anspruch 2, bei dem eine Transportöse (18) an einer bestimmten Stelle zwischen diesen Gewinderingen (17) befestigt wird, wobei diese Transportöse (18) mit einer Montagebohrung 19 und einer Anschlußleitungsdurchgangsöffnung (20) ausgeführt ist.

## Revendications

1. Cabine de conduite d'un bulldozer, qui est réalisée sous la forme d'une pyramide hexagonale tronquée, ayant un panneau de toit (12) façonné intégralement par emboutissage et des panneaux latéraux (13), lesquels panneaux (12, 13) sont assemblés en couplant une pluralité de trous de référence (14) prévus sur la périphérie dudit panneau de toit (12) et le même nombre de trous de montage (15), prévus sur lesdits panneaux latéraux (13) comme lesdits trous de référence (14), à aligner avec lesdits trous de référence,
dans laquelle des montants de support (2) avant, extrêmes, droit et gauche sont prévus pour être en biais vers l'extérieur dans un domaine depuis une partie supérieure (2a) vers une partie intermédiaire (2b) de ladite cabine de conduite (1) et pour être en biais vers l'intérieur dans un domaine depuis ladite partie intermédiaire (2b) vers une partie de fond (2c) avec une largeur augmentant progressivement entre lesdits montants de support (2) pour accroître le champ de vision avant à partir d'un oeil de l'opérateur qui demeure à l'intérieur des portes droite et gauche (3) de ladite cabine de conduite.

2. Cabine de conduite d'un bulldozer selon la revendication 1, dans laquelle ledit panneau de toit (12) et lesdits panneaux latéraux (13) sont assemblés en couplant lesdits trous de référence (14) et lesdits trous de montage (15) à aligner avec lesdits trous de référence en utilisant des axes de positionnement (16), lesdits axes de positionnement (16) étant munis de taraudages (17) respectivement.

3. Cabine de conduite d'un bulldozer selon la revendication 2, dans laquelle un crochet de levage (18) est adapté à une position spécifiée entre lesdits taraudages (17), ledit crochet de levage (18) étant muni d'un trou de montage (19) pour une lampe de travail et d'un trou (20) pour un câble métallique.
